# EUROPÄISCHE PATENTANMELDUNG

(11) **EP 1 746 412 A2**
(43) Veröffentlichungstag der Anmeldung: **24.01.2007**
(21) Anmeldenummer: 06012413.8
(22) Anmeldetag: 16.06.2006
(51) Int. Cl.: G01N 27/30, G01N 27/333

(54) **Biosensoranordnung und Verfahren zu deren Herstellung**

(30) Priorität: 17.06.2005 DE 102005028245
(71) Anmelder: IonGate Biosciences GmbH, 65926 Frankfurt (DE)
(72) Erfinder: Kelety, Béla, 65931 Frankfurth (DE); Dörner, Wolfgang, 65239 Hochheim (DE); Krause, Robin, 60389 Frankfurth (DE)
(74) Vertreter: Müller - Hoffmann & Partner

(57) **Zusammenfassung**

Die Erfindung betrifft eine Biosensoranordnung (1) sowie ein Verfahren zu deren Herstellung. Die erfindungsgemäße Biosensoranordnung (1) ist mit mindestens einem Elektrodensubstrat (26) mit einer Oberfläche (26a) ausgebildet, welches eine Elektrode (26') der Biosensoranordnung (1) bildet. Des Weiteren ist mindestens ein Biomaterialbereich (24) ausgebildet, welcher in und/oder auf der Oberfläche (26a) des Elektrodensubstrats (26) vorgesehen ist. Das Elektrodensubstrat (26) ist mit oder aus einem Kunststoffmaterial oder mit oder aus einem Polymermaterial ausgebildet, die ihrerseits elektrisch leitfähig sind.

## Beschreibung

Die Erfindung betrifft eine Biosensoranordnung und ein Verfahren zu deren Herstellung.

In vielen Bereichen der chemischen und biochemischen Analysetechnik werden biokompatible oder biologisch kompatible Materialanordnungen verwendet, insbesondere biokompatible oder biologisch kompatible Sensoranordnungen oder Sensorelektrodenanordnungen. Durch diese Materialanordnungen, Sensoranordnungen oder Sensorelektrodenanordnungen werden in der Anwendung bestimmte Messprozesse im Hinblick auf einen chemisch, biologisch oder biochemisch relevanten Analyten durchgeführt.

Bei Analyseverfahren mit hohen Durchsätzen, z.B. bei so genannten High-Throughput-Screeningverfahren sind verschiedene Charakteristika für die biologisch kompatiblen Materialanordnungen, Sensoranordnungen oder Sensorelektrodenanordnungen wünschenswert, insbesondere im Hinblick auf ihre elektrische Sensitivität, ihre mechanische Stabilität und/oder ihre hohe und kostengünstige Verfügbarkeit. Bei herkömmlichen Materialanordnungen, Sensoranordnungen oder Sensorelektrodenanordnungen werden Trägersubstrate verwendet, die zwar vergleichsweise mechanisch stabil ausgebildet sind, aber ansonsten eine vergleichsweise schwierige Handhabbarkeit mit sich führen und auch nicht unbedingt kostengünstig hergestellt werden können.

Der Erfindung liegt die Aufgabe zugrunde, eine Biosensoranordnung sowie ein Verfahren zu deren Herstellung anzugeben, welche besonders einfach, kostengünstig und gleichwohl zuverlässig handhabbar sind.

Gelöst wird die Aufgabe bei einer Biosensoranordnung erfindungsgemäß mit den kennzeichnenden Merkmalen des Anspruchs 1. Ferner wird die Aufgabe gelöst bei einem Verfahren zum Herstellen Biosensoranordnung mit den kennzeichnenden Merkmale des Anspruchs 36. Vorteilhafte Weiterbildungen sind jeweils Gegenstand der abhängigen Unteransprüche.

Die erfindungsgemäße Biosensoranordnung ist zur amperometrischen und/oder potenziometrischen, pharmakologischen Wirkort- und/oder Wirkstofftestung ausgebildet. Die erfindungsgemäße Biosensoranordnung weist mindestens ein Elektrodensubstrat mit einer Oberfläche auf, welches eine Elektrode der Biosensoranordnung oder ein Teil einer Elektrode bildet. Des Weiteren ist ein Biomaterialbereich ausgebildet welcher in und/oder auf der Oberfläche des Elektrodensubstrats vorgesehen ist. Das Elektrodensubstrat ist mit oder aus einem Kunststoffmaterial oder mit oder aus einem Polymermaterial ausgebildet. Das Kunststoffmaterial oder das Polymermaterial sind erfindungsgemäß elektrisch leitfähig ausgebildet.

Es ist somit eine Kernidee der vorliegenden Erfindung, als Elektrodensubstrat oder als Teil davon ein Kunststoffmaterial oder ein Polymermaterial zu verwenden, welche ihrerseits elektrisch leitfähig sind. Durch diese Maßnahme können die üblicherweise vorgesehenen metallischen Strukturen oder Strukturen auf der Grundlage leitfähiger Metalloxide für herkömmliche Elektrodensubstrate verlassen werden. Dies hat verfahrenstechnische, messtechnische und/oder gegebenenfalls biochemische Vorteile, da in vielen Fällen nicht ausgeschlossen werden kann, dass üblicherweise vorgesehene Metallelektroden metallische Spuren in die Umgebung abgeben und dadurch zu einer Kontamination der durch die Biosensoranordnung zu untersuchenden biologischen Objekte führen. Dies wird erfindungsgemäß verhindert.

Unter einem Biomaterialbereich soll im Sinne der Erfindung vorangehend und nachfolgend verstanden werden ein Materialbereich der kompatibel ist zu einer zu untersuchenden und daher an der erfindungsgemäßen Biosensoranordnung anzulagernden Spezies insbesondere in Form von eukariontischen Zellen, prokariontischen Zellen, Bakterien, Viren, Bestandteilen davon, Membranfragmenten davon, Verbänden davon, jeweils in nativer Form, in abgewandelter Form, in gereinigter, mikrobiologisch geänderter Form und/oder in molekularbiologisch geänderter Form, sowie in Form von Vesikeln, Liposomem, mizellären Strukturen und/und deren Bestandteilen oder Verbänden und ferner darin enthaltener biologischer Einheiten insbesondere in Form von Membranproteinen, Ionenpumpen, Ionenkanälen, Transportern, Rezeptoren, Bestandteilen davon und Verbänden davon.

Bei einer Fortbildung der erfindungsgemäßen Biosensoranordnung sind das Kunststoffmaterial oder das Polymermaterial mit oder aus einem oder mehreren organischen Materialien ausgebildet.

Bei einer anderen Fortbildung der erfindungsgemäßen Biosensoranordnung ist zusätzlich oder alternativ die elektrische Leitfähigkeit des Kunststoffmaterials oder des Polymermaterials durch das Vorsehen mindestens eines ersten Zuschlagsstoffes im Kunststoffmaterial oder Polymermaterial ausgebildet.

Bei einer weiteren Fortbildung der erfindungsgemäßen Biosensoranordnung ist zusätzlich oder alternativ als mindestens ein erster Zuschlagsstoff ein metallisches Material vorgesehen.

Bei einer vorteilhaften Ausgestaltung der erfindungsgemäßen Biosensoranordnung ist es zusätzlich oder alternativ vorgesehen, dass als mindestens ein erster Zuschlagsstoff eine Form von Kohlenstoff vorgesehen ist.

Bei einer bevorzugten Ausgestaltung der erfindungsgemäßen Biosensoranordnung ist es zusätzlich oder alternativ vorgesehen, dass als mindestens ein erster Zuschlagsstoff ein Material aus oder mit Nanopartikeln und/oder mit Nanotubes vorgesehen ist.

Bei einer anderen vorteilhaften Ausgestaltung der erfindungsgemäßen Biosensoranordnung ist es zusätzlich oder alternativ vorgesehen, dass als mindestens ein erster Zuschlagsstoff ein Material oder eine Kombination von Materialien aus der Gruppe vorgesehen ist, die besteht aus Kohlenstoff in Form von Ruß, Kohlenstoff in Form von Graphit, Kohlenstoff in Form von Nanopartikeln, Kohlenstoff in Form von Buckminsterfullerenen oder deren - insbesondere gecageten - Derivaten, Kohlenstoff in Form von Nanotubes und Derivaten dieser Materialien.

Bei einer besonders bevorzugten Ausgestaltung der erfindungsgemäßen Biosensoranordnung ist es zusätzlich oder alternativ vorgesehen, dass der Biomaterialbereich elektrisch isolierend ausgebildet ist und dass durch den Biomaterialbereich das Elektrodensubstrat elektrisch isoliert ausgebildet ist.

Bei einer weiter bevorzugten Ausgestaltung der erfindungsgemäßen Biosensoranordnung ist es zusätzlich oder alternativ vorgesehen, dass der Biomaterialbereich schichtartig ausgebildet ist.

Bei einer besonders vorteilhaften Ausgestaltung der erfindungsgemäßen Biosensoranordnung ist es zusätzlich oder alternativ vorgesehen, dass der Biomaterialbereich mit einer oder aus einer Abfolge von Monoschichten gebildet ist.

Bei einer anderen Ausführungsform der erfindungsgemäßen Biosensoranordnung ist es zusätzlich oder alternativ vorgesehen, dass die Monoschichten als spontan selbstorganisierende Schichten ausgebildet sind.

Bei einer weiteren Ausführungsform der erfindungsgemäßen Biosensoranordnung ist es zusätzlich oder alternativ vorgesehen, dass der Biomaterialbereich oder eine oder mehrere Schichten des Biomaterialbereichs als chemisch und/oder physikalisch modifizierter oder umgewandelter Bereich der Oberfläche des Elektrodensubstrats ausgebildet sind.

Bei einer vorteilhaften Ausführungsform der erfindungsgemäßen Biosensoranordnung ist es zusätzlich oder alternativ vorgesehen, dass der Biomaterialbereich oder eine oder mehrere Schichten des Biomaterialbereichs über einen zweiten Zuschlagsstoff im Material des Elektrodensubstrats ausgebildet sind.

Bei einer anderen vorteilhaften Ausführungsform der erfindungsgemäßen Biosensoranordnung ist es zusätzlich oder alternativ vorgesehen, dass der Biomaterialbereich oder eine oder mehrere Schichten des Biomaterialbereichs über eine inhärente Oberflächenstruktur im Material des Elektrodensubstrats ausgebildet sind.

Bei einer bevorzugten Ausführungsform der erfindungsgemäßen Biosensoranordnung ist es zusätzlich oder alternativ vorgesehen, dass der Biomaterialbereich oder eine oder mehrere Schichten des Biomaterialbereichs über ein zusätzlich auf die Oberfläche des Elektrodensubstrats aufgebrachtes Oberflächenmaterial ausgebildet sind.

Bei einer besonders vorteilhaften Ausführungsform der erfindungsgemäßen Biosensoranordnung ist es zusätzlich oder alternativ vorgesehen, dass der Biomaterialbereich als Schicht oder mit einer obersten und vom Elektrodensubstrat abgewandten Schicht mit oder aus einer amphiphilen organischen Verbindung oder einem Lipid ausgebildet ist.

Denkbar ist auch eine alternative oder zusätzliche Ausgestaltungsform der erfindungsgemäßen Biosensoranordnung, bei welcher das Elektrodensubstrat und der Biomaterialbereich als Membranbiosensorelektrode und als Sekundärträger der Biosensoranordnung fungierend ausgebildet sind, bei welcher eine Mehrzahl Primärträger in unmittelbarer räumlicher Nachbarschaft des Sekundärträgers vorgesehen ist und bei welcher die Primärträger zu einer elektrischen Aktion aktivierbare biologische Einheiten aufweisen.

Ferner ist auch eine alternative oder zusätzliche Ausgestaltungsform der erfindungsgemäßen Biosensoranordnung möglich, bei welcher als Primärträger ein Primärträger aus der Gruppe vorgesehen ist, die gebildet wird von: eukariontischen Zellen, prokariontischen Zellen, Bakterien, Viren, Bestandteilen davon, Membranfragmenten davon, Verbänden davon, jeweils in nativer Form, in abgewandelter Form, in gereinigter; mikrobiologisch geänderter Form und/oder in molekularbiologisch geänderter Form.

Alternativ denkbar ist auch eine Ausführungsform der erfindungsgemäßen Biosensoranordnung, bei welcher als Primärträger ein Primärträger aus der Gruppe vorgesehen ist, die gebildet wird von: Vesikeln, Liposomen und mizellären Strukturen.

Bei einer anderen Ausgestaltung der erfindungsgemäßen Biosensoranordnung ist es zusätzlich oder alternativ vorgesehen, dass durch den Biomaterialbereich die jeweilige Elektrode im Betrieb von einem vorgesehenen Messmedium, von den Primärträgern und von den biologischen Einheiten elektrisch isoliert ist.

Es ist bei einer besonders vorteilhaften Ausgestaltung der erfindungsgemäßen Biosensoranordnung ist es zusätzlich oder alternativ vorgesehen, dass der das Elektrodensubstrat isolierende und abdeckende Bereich des Biomaterialbereichs mit einer Membranstruktur oder SSM mit einer Fläche von etwa A ≈ 0,1 - 50 mm² und mit einer spezifischen elektrischen Leitfähigkeit von etwa Gₘ ≈ 1 - 100 nS/cm² und/oder mit einer spezifischen Kapazität von etwa Cₘ ≈ 10 - 1000 nF/cm² ausgebildet ist.

Bei einer anderen Form der erfindungsgemäßen Biosensoranordnung ist es zusätzlich oder alternativ vorgesehen, dass eine biologische Einheit vorgesehen ist, welche zu einer elektrogenen Ladungsträgerbewegung aktivierbar ausgebildet ist, insbesondere zu einem elektrogenen Ladungsträgertransport.

Bei einer anderen bevorzugten Form der erfindungsgemäßen Biosensoranordnung ist es zusätzlich oder alternativ vorgesehen, dass als biologische Einheit jeweils eine Einheit aus der Gruppe vorgesehen ist, die gebildet wird von: Membranproteinen, Ionenpumpen, Ionenkanälen, Transportern, Rezeptoren, Bestandteilen davon und Verbänden davon.

Als biologische Einheit kann eine Einheit in nativer Form, in abgewandelter Form, in gereinigter Form, in mikrobiologisch geänderter Form oder molekularbiologisch geänderter Form vorgesehen sein.

Ferner ist es möglich, dass ein Trägersubstrat mit einer Oberfläche ausgebildet ist, insbesondere auf einer vorgesehenen Oberseite, und dass das Elektrodensubstrat zumindest teilweise auf und/oder in dem Trägersubstrat und/oder als Teil der Oberfläche des Trägersubstrats ausgebildet ist.

Auch ist es denkbar, dass das Trägersubstrat mit dem Elektrodensubstrat zusammen als ein Gefäß - insbesondere in höchsten bis auf Zu- und Abfluss geschlossener Form einer Durchflussküvette - oder als Teil eines Gefäßes ausgebildet ist.

Das Trägersubstrat und das Elektrodensubstrat können miteinander einstückig ausgebildet sein.

Dabei kann das Trägersubstrat und das Elektrodensubstrat in Mehrkomponentenspritzgusstechnik gefertigt ausgebildet sein.

Das Trägersubstrat kann aus einem oder mit einem chemisch und biologisch inerten Material ausgebildet sein.

Das Trägersubstrat kann aus einem oder mit einem elektrisch isolierenden Material ausgebildet sein.

Das Trägersubstrat kann aus einem oder mit einem mechanisch flexiblen Material ausgebildet sein, z.B. nach Art einer Folie.

Das Trägersubstrat kann aus einem oder mit einem gegenüber Proteinen, biologischen und/oder chemischen Wirkstoffen höchstens gering adsorptiven Material ausgebildet sein.

Das Trägersubstrat kann aus einem oder mit einem Material oder einer Kombination von Materialien aus der Gruppe ausgebildet sein, die besteht aus PMMA, PTFE, POM, FR4, Polyimid, PI, Kapton, PEN, PET, im UV-Bereich transparenten Materialien und im sichtbaren Spektralbereich transparenten Materialien.

In vorteilhafter Weise kann eine Mehrzahl Elektrodensubstrate und Biomaterialbereiche in zusammenhängender oder in getrennter Form, elektrisch voneinander isoliert und lateral voneinander beabstandet und dadurch eine Mehrzahl elektrisch unabhängiger Elektroden ausgebildet sein.

Dabei kann die Mehrzahl Elektroden in einer Reihe oder in Matrixform angeordnet sein.

Gemäß einem weiteren Aspekt der vorliegenden Erfindung wird ein Verfahren zum Herstellen einer Biosensoranordnung zur amperometrischen und/oder potenziometrischen, pharmakologischen Wirkort- und/oder Wirkstofftestung geschaffen, bei welchem die Biosensoranordnung mit mindestens einem Elektrodensubstrat mit einer Oberfläche ausgebildet wird, wobei das Elektrodensubstrat eine Elektrode der Biosensoranordnung oder ein Teil einer Elektrode bildet. Des Weiteren wird mindestens ein Biomaterialbereich ausgebildet, welcher in und/oder auf der Oberfläche des Elektrodensubstrats vorgesehen wird. Das Elektrodensubstrat wird mit oder aus einem Kunststoffmaterial oder mit oder aus einem Polymermaterial ausgebildet, wobei das Kunststoffmaterial oder das Polymermaterial elektrisch leitfähig vorgesehen werden.

Bei einer Fortbildung des erfindungsgemäßen Verfahrens zum Herstellen der erfindungsgemäßen Biosensoranordnung werden das Kunststoffmaterial oder das Polymermaterial mit oder aus einem oder mehreren organischen Materialien ausgebildet.

Bei einer anderen Fortbildung des erfindungsgemäßen Verfahrens zum Herstellen der erfindungsgemäßen Biosensoranordnung wird zusätzlich oder alternativ die elektrische Leitfähigkeit des Kunststoffmaterials oder des Polymermaterials durch das Vorsehen mindestens eines ersten Zuschlagsstoffes im Kunststoffmaterial oder Polymermaterial ausgebildet.

Bei einer weiteren Fortbildung des erfindungsgemäßen Verfahrens zum Herstellen der erfindungsgemäßen Biosensoranordnung wird zusätzlich oder alternativ als mindestens ein erster Zuschlagsstoff ein metallisches Material vorgesehen.

Bei einer vorteilhaften Ausgestaltung des erfindungsgemäßen Verfahrens zum Herstellen der erfindungsgemäßen Biosensoranordnung ist es zusätzlich oder alternativ vorgesehen, dass als mindestens ein erster Zuschlagsstoff eine Form von Kohlenstoff vorgesehen wird.

Bei einer bevorzugten Ausgestaltung des erfindungsgemäßen Verfahrens zum Herstellen der erfindungsgemäßen Biosensoranordnung ist es zusätzlich oder alternativ vorgesehen, dass als mindestens ein erster Zuschlagsstoff ein Material aus oder mit Nanopartikeln und/oder mit Nanotubes vorgesehen wird.

Bei einer anderen vorteilhaften Ausgestaltung des erfindungsgemäßen Verfahrens zum Herstellen der erfindungsgemäßen Biosensoranordnung ist es zusätzlich oder alternativ vorgesehen, dass als mindestens ein erster Zuschlagsstoff ein Material oder eine Kombination von Materialien aus der Gruppe vorgesehen wird, die besteht aus Kohlenstoff in Form von Ruß, Kohlenstoff in Form von Graphit, Kohlenstoff in Form von Nanopartikeln, Kohlenstoff in Form von Buckminsterfullerenen oder deren - insbesondere gecageten - Derivaten, Kohlenstoff in Form von Nanotubes und Derivaten dieser Materialien.

Bei einer besonders bevorzugten Ausgestaltung des erfindungsgemäßen Verfahrens zum Herstellen der erfindungsgemäßen Biosensoranordnung ist es zusätzlich oder alternativ vorgesehen, dass der Biomaterialbereich elektrisch isolierend ausgebildet ist und dass durch den Biomaterialbereich das Elektrodensubstrat elektrisch isoliert ausgebildet wird.

Bei einer weiter bevorzugten Ausgestaltung der erfindungsgemäßen Biosensoranordnung ist es zusätzlich oder alternativ vorgesehen, dass der Biomaterialbereich schichtartig ausgebildet ist.

Bei einer besonders vorteilhaften Ausgestaltung des erfindungsgemäßen Verfahrens zum Herstellen der erfindungsgemäßen Biosensoranordnung ist es zusätzlich oder alternativ vorgesehen, dass der Biomaterialbereich mit einer oder aus einer Abfolge von Monoschichten gebildet wird.

Bei einer anderen Ausführungsform des erfindungsgemäßen Verfahrens zum Herstellen der erfindungsgemäßen Biosensoranordnung ist es zusätzlich oder alternativ vorgesehen, dass die Monoschichten als spontan selbstorganisierende Schichten ausgebildet werden.

Bei einer weiteren Ausführungsform des erfindungsgemäßen Verfahrens zum Herstellen der erfindungsgemäßen Biosensoranordnung ist es zusätzlich oder alternativ vorgesehen, dass der Biomaterialbereich oder eine oder mehrere Schichten des Biomaterialbereichs als chemisch und/oder physikalisch modifizierter oder umgewandelter Bereich der Oberfläche des Elektrodensubstrats ausgebildet werden.

Bei einer vorteilhaften Ausführungsform des erfindungsgemäßen Verfahrens zum Herstellen der erfindungsgemäßen Biosensoranordnung ist es zusätzlich oder alternativ vorgesehen, dass der Biomaterialbereich oder eine oder mehrere Schichten des Biomaterialbereichs über einen zweiten Zuschlagsstoff im Material des Elektrodensubstrats ausgebildet werden.

Bei einer anderen vorteilhaften Ausführungsform des erfindungsgemäßen Verfahrens zum Herstellen der erfindungsgemäßen Biosensoranordnung ist es zusätzlich oder alternativ vorgesehen, dass der Biomaterialbereich oder eine oder mehrere Schichten des Biomaterialbereichs über eine inhärente Oberflächenstruktur im Material des Elektrodensubstrats ausgebildet werden.

Bei einer bevorzugten Ausführungsform des erfindungsgemäßen Verfahrens zum Herstellen der erfindungsgemäßen Biosensoranordnung ist es zusätzlich oder alternativ vorgesehen, dass der Bioinaterialbereich oder eine oder mehrere Schichten des Biomaterialbereichs über ein zusätzlich auf die Oberfläche des Elektrodensubstrats aufgebrachtes Oberflächenmaterial ausgebildet werden.

Bei einer besonders vorteilhaften Ausführungsform des erfindungsgemäßen Verfahrens zum Herstellen der erfindungsgemäßen Biosensoranordnung ist es zusätzlich oder alternativ vorgesehen, dass der Biomaterialbereich als Schicht oder mit einer obersten und vom Elektrodensubstrat abgewandten Schicht mit oder aus einer amphiphilen organischen Verbindung oder einem Lipid ausgebildet wird.

Denkbar ist auch eine alternative oder zusätzliche Ausgestaltungsform des erfindungsgemäßen Verfahrens zum Herstellen der erfindungsgemäßen Biosensoranordnung, bei welcher das Elektrodensubstrat und der Biomaterialbereich als Membranbiosensorelektrode und als Sekundärträger der Biosensoranordnung fungierend ausgebildet werden, bei welcher eine Mehrzahl Primärträger in unmittelbarer räumlicher Nachbarschaft des Sekundärträgers vorgesehen ist und bei welcher die Primärträger zu einer elektrischen Aktion aktivierbare biologische Einheiten aufweisen.

Ferner ist auch eine alternative oder zusätzliche Ausgestaltungsform des erfindungsgemäßen Verfahrens zum Herstellen der erfindungsgemäßen Biosensoranordnung möglich, bei welcher als Primärträger ein Primärträger aus der Gruppe vorgesehen wird, die gebildet wird von: eukariontischen Zellen, prokariontischen Zellen, Bakterien, Viren, Bestandteilen davon, Membranfragmenten davon, Verbänden davon, jeweils in nativer Form, in abgewandelter Form, in gereinigter, mikrobiologisch geänderter Form und/oder in molekularbiologisch geänderter Form.

Alternativ denkbar ist auch eine Ausführungsform des erfindungsgemäßen Verfahrens zum Herstellen der erfindungsgemäßen Biosensoranordnung, bei welcher als Primärträger ein Primärträger aus der Gruppe vorgesehen wird, die gebildet wird von: Vesikeln, Liposomen und mizellären Strukturen.

Bei einer anderen Ausgestaltung des erfindungsgemäßen Verfahrens zum Herstellen der erfindungsgemäßen Biosensoranordnung ist es zusätzlich oder alternativ vorgesehen, dass durch den Biomaterialbereich die jeweilige Elektrode im Betrieb von einem vorgesehenen Messmedium, von den Primärträgern und von den biologischen Einheiten elektrisch isoliert wird.

Es ist bei einer besonders vorteilhaften Ausgestaltung des erfindungsgemäßen Verfahrens zum Herstellen der erfindungsgemäßen Biosensoranordnung zusätzlich oder alternativ vorgesehen, dass der das Elektrodensubstrat isolierende und abdeckende Bereich des Biomaterialbereichs mit einer Membranstruktur oder SSM mit einer Fläche von etwa A ≈ 0,1 - 50 mm² und mit einer spezifischen elektrischen Leitfähigkeit von etwa Gₘ ≈ 1 - 100 nS/cm² und/oder mit einer spezifischen Kapazität von etwa Cₘ ≈ 10 - 1000 nF/cm² ausgebildet wird.

Bei einer anderen Form des erfindungsgemäßen Verfahrens zum Herstellen der erfindungsgemäßen Biosensoranordnung ist es zusätzlich oder alternativ vorgesehen, dass eine biologische Einheit vorgesehen ist, welche zu einer elektrogenen Ladungsträgerbewegung aktivierbar ausgebildet wird, insbesondere zu einem elektrogenen Ladungsträgertransport.

Bei einer anderen bevorzugten Form der erfindungsgemäßen Biosensoranordnung ist es zusätzlich oder alternativ vorgesehen, dass als biologische Einheit jeweils eine Einheit aus der Gruppe vorgesehen wird, die gebildet wird von: Membranproteinen, Ionenpumpen, Ionenkanälen, Transportern, Rezeptoren, Bestandteilen davon und Verbänden davon.

Als biologische Einheit kann eine Einheit in nativer Form, in abgewandelter Form, in gereinigter Form, in mikrobiologisch geänderter Form oder molekularbiologisch geänderter Form vorgesehen werden.

Ferner ist es möglich, dass ein Trägersubstrat mit einer Oberfläche ausgebildet ist, insbesondere auf einer vorgesehenen Oberseite, und dass das Elektrodensubstrat zumindest teilweise auf und/oder in dem Trägersubstrat und/oder als Teil der Oberfläche des Trägersubstrats ausgebildet wird.

Auch ist es denkbar, dass das Trägersubstrat mit dem Elektrodensubstrat zusammen als ein Gefäß - insbesondere in höchsten bis auf Zu- und Abfluss geschlossener Form einer Durchflussküvette - oder als Teil eines Gefäßes ausgebildet wird.

Das Trägersubstrat und das Elektrodensubstrat können miteinander einstückig ausgebildet werden.

Dabei kann das Trägersubstrat und das Elektrodensubstrat in Mehrkomponentenspritzgusstechnik gefertigt ausgebildet werden.

Das Trägersubstrat kann aus einem oder mit einem chemisch und biologisch inerten Material ausgebildet werden.

Das Trägersubstrat kann aus einem oder mit einem elektrisch isolierenden Material ausgebildet sein.

Das Trägersubstrat kann aus einem oder mit einem mechanisch flexiblen Material ausgebildet werden, z.B. nach Art einer Folie.

Das Trägersubstrat kann aus einem oder mit einem gegenüber Proteinen, biologischen und/oder chemischen Wirkstoffen höchstens gering adsorptiven Material ausgebildet sein.

Das Trägersubstrat kann aus einem oder mit einem Material oder einer Kombination von Materialien aus der Gruppe ausgebildet werden, die besteht aus PMMA, PTFE, POM, FR4, Polyimid, PI, Kapton, PEN, PET, im UV-Bereich transparenten Materialien und im sichtbaren Spektralbereich transparenten Materialien.

In vorteilhafter Weise kann eine Mehrzahl Elektrodensubstrate und Biomaterialbereiche in zusammenhängender oder in getrennter Form, elektrisch voneinander isoliert und lateral voneinander beabstandet und dadurch eine Mehrzahl elektrisch unabhängiger Elektroden ausgebildet werden.

Dabei kann die Mehrzahl Elektroden in einer Reihe oder in Matrixform angeordnet werden.

Diese und weitere Aspekte der vorliegenden Erfindung ergeben sich mit anderen Worten auch aus den nachfolgenden Bemerkungen:

Die Erfindung dient unter anderem Vereinfachung und Kostensenkung bei der Sensorherstellung.

Ein Messraum ist z.B. ein von seiner Umgebung durch ein Wasser undurchlässiges und/oder Lösungsmittel undurchlässiges Material, der ein bestimmtes, befüllbares Volumen und eine zum Aufbau eines hybriden Biosensors geeignete Oberfläche eines elektrisch leitenden und nach außen im Bezug auf den Messinnenraum kontaktierten Materials aufweist.

Es sind Messräume bekannt, deren Wände beispielsweise aus einem auf ein planares Glasstück aufgeklebten runden Glasrohrabschnitt und dem planaren Glasstück gebildet werden. Auf dem Glasstück befindet sich, konzentrisch mit dem Glasrohrabschnitt angeordnet, beispielsweise eine Dünnschicht technisch erzeugte Goldschicht in Form einer runden Säule von beispielsweise 3 mm Durchmesser und 200 nm Höhe. Diese Goldschicht ist zum Beispiel über einen Steg aus Gold mit einer Breite von 200 µm und einer Höhe von 200 nm, der unter dem aufgeklebten Glasrohrabschnitt verläuft, mit einem zu dem Glasrohr konzentrisch außerhalb des Glasrohrabschnitts angeordneten Kreisring aus Gold verbunden.

Des Weiteren sind Messräume bekannt, deren Böden aus Leiterplattenmaterial bestehen. Als Basis zum Aufbau einer Oberfläche zur Anheftung von proteinhaltigen Lipidmembranstrukturen dienen vergoldete Leiterbahnen aus Kupfer. Die weiteren Wände der Messräume werden aus Kunststoff- oder Polymerrohrstücken oder Glasrohrabschnitten gebildet.

Des Weiteren sind Messräume bekannt, die monolithisch aus Kunststoff- oder Polymerwerkstoffen spanend oder mittels Spritzguss hergestellt werden. Als Basis zum Aufbau einer Oberfläche zur Anheftung von proteinhaltigen Lipidmembranstrukturen dienen vergoldete Metallstifte, die in die Werkstücke eingeklebt werden.

Es sind festkörperunterstützte biomimetische Strukturen bekannt, die durch selbststrukturierende Aufbringung von amphiphilen Molekülen auf hydrophile Substratoberflächen leitfähiger Materialien hergestellt werden (Beispiel für Substratmaterialien: Indium-Zinnoxid, kurz: ITO, Glaskohlenstoff). Mit Ausnahme von Lipiden aus extremophilen Organismen bilden amphiphile Moleküle im Allgemeinen je nach Art der Herstellung auf den genannten Materialien eine monomolekulare Schicht, die auf ihrer - der Substratoberfläche abgewandten - Oberfläche hydrophob ist, oder eine molekulare Doppelschicht, die auf ihrer - der Substratoberfläche abgewandten - Oberfläche hydrophil ist.

Die beschriebenen Materialien ITO und Glaskohlenstoff sowie Gold oder vergoldete Metallteile weisen in der Regel hydrophile Oberflächen auf. Das hat zwei Konsequenzen. Erstens besteht bei der Kombination mit zur Massenfertigung tauglichen Polymeren die Gefahr von Grenzflächeneffekten, die zur Destabilisierung von Verklebungen, zur Ablösung und/oder zum Einkapilieren von wässrigen Versuchslösungen führen können. Zweitens ist die Vorbereitung von Sensoroberflächen kompliziert und fehleranfällig, weil immer von einer hydrophilen Oberfläche ausgegangen werden muss, die in der Regel zur Vorbereitung für die Verwendung als Biosensor zunächst mit einer hydrophobisierenden, monomolekularen Schicht und abschließend mit einer hydrophilisierenden monomolekularen Schicht überzogen wird.

Ein Aspekt der Erfindung ist die Verwendung eines elektrisch leitfähigen organischen Polymers als unterstützenden Festkörper zum Aufbau von hybriden Biosensoren. Unter einem elektrisch leitfähiges organisches Polymer kann wird hier - aber nicht ausschließlich, sondern insbesondere - ein durch Zuschlag von Kohlenstoff leitfähig gemachter, thermoplastischer Elastomerwerkstoff verstanden.

Ein weiterer Aspekt der Erfindung ist die Modifikation der Polymeroberfläche, die dem Zweck dient, eine stabile Anlagerung proteinhaltiger Lipidmembranstrukturen zu gewährleisten.

Ein weiterer Aspekt betrifft die Form und Zusammensetzung von Sensoren. Nicht elektrisch leitfähige Polymere oder Kunststoffe können verwendet werden, um einen Messraum als Bestandteil eines Sensors herzustellen. Elektrisch leitfähige Polymere oder Kunststoffe können dann oder zugleich verwendet werden, um aktive Sensoroberflächen zu bilden. Bei derart aufgebauten Sensoren gibt es keine Kontaktflächen zwischen Kunststoffen oder Polymeren und Nichtkunststoffen oder Nichtpolymeren.

Aufgrund der inhärenten Eigenschaften von leitfähigen Polymeren, die denen nicht leitfähiger thermoplastischer Elastomere sehr ähnlich sein können, können beide Werkstoffe, insbesondere bei Mehrkomponentenspritzgussverfahren miteinander kombiniert werden. Diese Herstellungsweise macht eine spätere Fügung und /oder Verklebung überflüssig und verhindert die bei der Kombination von Metallteilen mit Kunststoffen auftretenden Grenzflächeneffekte wie zum Beispiel das Einkapilieren von wässrigen Versuchslösungen.

Eine Hydrophobizität von leitfähigen Polymeren erlaubt die direkte Anlagerung einer Monoschicht aus amphiphilen Molekülen, wobei eine nach außen hydrophile Oberfläche entsteht, die sich je nach Wahl der amphiphilen Substanz sehr gut zur Anlagerung von proteinhaltigen Lipidmembranstrukturen eignet.

Das Zuschlagen weiterer Additive kann dazu dienen, eine geeignete Oberfläche zur direkten Anlagerung von proteinhaltigen Lipidmembranstrukturen nach Abschluss des Fertigungsprozesses zu erzeugen.

Eine Reihe von Sensoren wurde vorbereitet, indem Granulat leitfähigen Polymers in die Bohrungen einer Leiterplatte eingeklebt wurden. Dazu diente ein UV-härtender Klebstoff, der in UV-Licht ausgehärtet wurde. Die Leiterplatte wurde unter eine 96-Probengefäß-Mikrotiterplatte geklebt. Nach dem Aushärten der Klebstoffe wurde eine Lösung von Diphytanoylphosphatidylcholin in Decan in die Probengefäße gegeben und sofort nach dem Benetzen der Oberfläche des leitfähigen Polymers weitgehend entfernt. Dann wurde das Probengefäß mit Messpuffer gefüllt. Nach dem fast vollständigen Entfernen des Messpuffers wurde das Gefäß mit proteinhaltiger Membransuspension bzw. Liposomensuspension befüllt und für mehrere Stunden bei 4°C inkubiert. In Lösungswechselexperimenten mit den für die jeweiligen Proteine (NhaA in Liposomen bzw. EAACl in CHO-Zellmembranfragmenten) vorgesehenen Messlösungen wurden die abgebildeten Messsignale erhalten.

Nachfolgend wird die vorliegende Erfindung anhand einer schematischer Zeichnungen auf der Grundlage bevorzugter Ausführungsbeispiele näher erläutert.
- Fig. 1A, 1B: beschreiben mittels einer schematischen Draufsicht bzw. mittels einer geschnittenen Seitenansicht eine erste Ausführungsform der erfindungsgemäßen Biosensoranordnung 1.
- Fig. 2A, 2B: beschreiben mittels einer schematischen Draufsicht bzw. mittels einer geschnittenen Seitenansicht eine zweite Ausführungsform der erfindungsgemäßen Biosensoranordnung 1.
- Fig. 3: ist eine schematische und geschnittene Seitenansicht, welche einen Primärträger 10 für eine biologische Einheit 12 im Sinne der Erfindung erläutert.
- Fig. 4: erläutert in schematischer und geschnittener Seitenansicht Details einer weiteren Ausführungsform der erfindungsgemäßen Biosensoranordnung 1.
- Fig. 5: erläutert in schematischer und geschnittener Seitenansicht Details einer weiteren Ausführungsform der erfindungsgemäßen Biosensoranordnung 1.
- Fig. 6: erläutert in schematischer und geschnittener Seitenansicht Details einer weiteren Ausführungsform der erfindungsgemäßen Biosensoranordnung 1.
- Fig. 7: demonstriert in Form exemplarischer Messkurven eine erste Anwendung einer Ausführungsform der erfindungsgemäßen Biosensoranordnung 1.
- Fig. 8: demonstriert in Form exemplarischer Messkurven eine weitere Anwendung einer Ausführungsform der erfindungsgemäßen Biosensoranordnung 1.

Nachfolgend bezeichnen dieselben Bezugszeichen gleiche, gleichartige oder gleichwirkende Strukturen oder Elemente. Nicht in jedem Fall ihres Auftretens wird dabei eine detaillierte Beschreibung wiederholt.

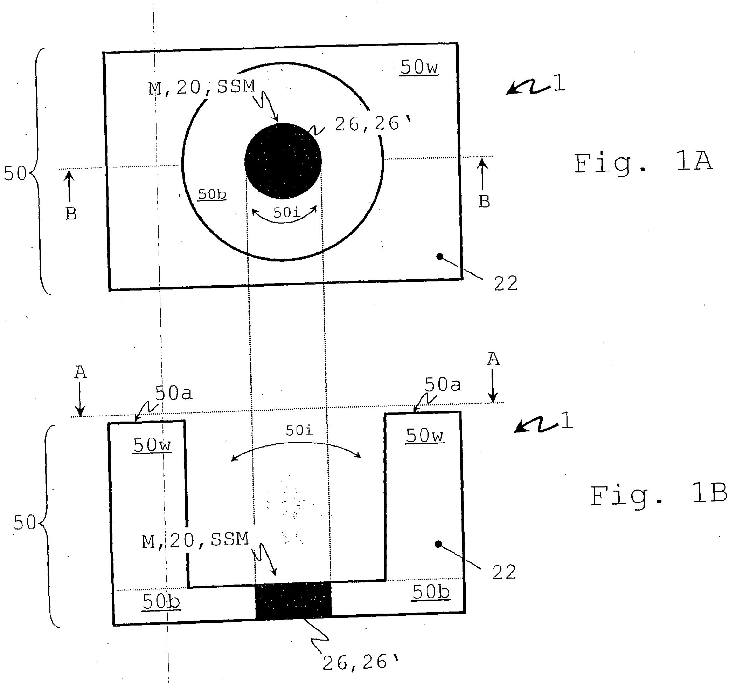

Fig. 1 zeigt in schematischer und geschnittener Seitenansicht eine erste Ausführungsform der erfindungsgemäßen Biosensoranordnung 1.

Die Fig. 1A und 1B zeigen in schematischer Draufsicht bzw. in schematischer und geschnittener Seitenansicht eine erste Ausführungsform der erfindungsgemäßen Biosensoranordnung 1.

Die Ausführungsform der erfindungsgemäßen Biosensoranordnung 1 gemäß den Fig. 1A und 1B bildet als Ganzes ein Gefäß oder Messgefäß 50, welches geschlossen sein kann, wobei aber in der Fig. 1B die offene Form des Messgefäßes 50 dargestellt ist. Das Messgefäß 50 wird gebildet von Wandbereichen oder Wänden 50w und von einem Bodenbereich oder Boden 50b. Die Wandbereiche 50w und der Bodenbereich 50b werden von einem Trägersubstrat oder Trägermaterial 22 gebildet. Wie aus Fig. 1B ersichtlich ist, ist das Trägersubstrat 22 mit einer Ausnehmung ausgebildet, durch welche der Gefäßinnenraum 50i des Gefäßes 50 definiert wird. Auf dem freien Bereich des Bodens 50b des Gefäßes 50 ist in den Boden 50b integriert ein Elektrodensubstrat 26 zur Definition einer Elektrode 26' vorgesehen. Die Oberseite 26a der Elektrode 26' oder des Elektrodensubstrats 26 zeigt zum Gefäßinnenraum 50i des Gefäßes 50 und dient dazu, eine Membransensorelektrode M in Form einer festkörperunterstützten Membran SSM und somit einem Sekundärträger 20 zu definieren. Die Rückseite 26b der Elektrode 26' und somit des Elektrodensubstrats 26 kann zur externen Kontaktierung und zum elektrischen Abgriff der Elektrode 26' genutzt werden.

Die Fig. 1A ist eine Draufsicht des in den Fig. 1A und 1B dargestellten Gegenstands entlang der Ebene oder Linie A-A aus Fig. 1B. Umgekehrt ergibt sich die Ansicht der Fig. 1B als Schnittansicht entlang der Linie oder Ebene B-B aus Fig. 1A.

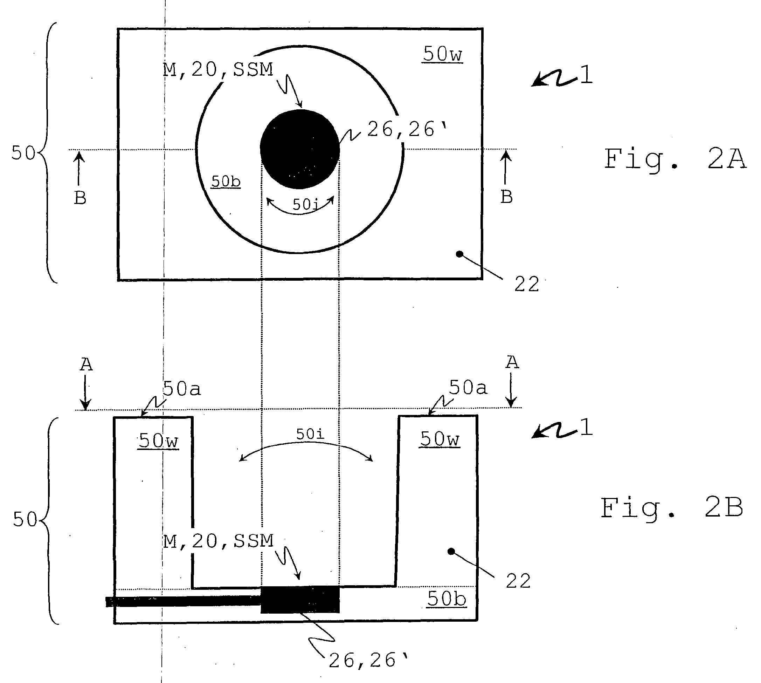

Die Ausführungsform der erfindungsgemäßen Biosensoranordnung 1, die in den Fig. 2A und 2B dargestellt ist, entspricht im Wesentlichen der Ausführungsform, die in den Fig. 1A und 1B dargestellt ist. Jedoch besteht ein Unterschied dahingehend, dass das Elektrodensubstrat 26 nur eine freie Oberfläche 26a besitzt, wogegen die Unterfläche 26b im Trägersubstrat 22, nämlich im Bodenbereich 50b eingebettet ausgebildet ist, so dass zusätzlich ein seitlicher elektrischer Abgriff 29 zur Ableitung elektrischer Signale, die an der Membransensorelektrode M in Form der SSM als Sekundärträger 20 entstehen.

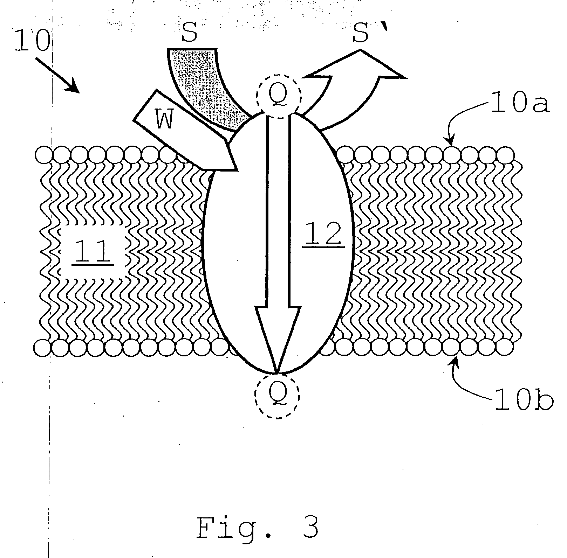

Die Fig. 3 erläutert in schematischer und geschnittener Seitenansicht den Aufbau und die Funktion eines Primärträgers 10, welcher eine biologische Einheit 12 aufweist, und zwar in membrandurchspannender Form, durch welche elektrische Aktionen bewirkbar sind.

Grundelement des Primärträgers 10 ist eine Membran 11, gemäß der Fig. 3 in Form einer Lipiddoppelschicht. Durch die Membran 11 wird eine erste oder obere Seite 10a und eine zweite oder untere Seite 10b definiert. Die Seiten 10a und 10b des Primärträgers 10 können z.B. die intra- und extrazelluläre Seite einer Zellmembran oder Organellmembran oder auch einer künstlichen Membran sein. Membrandurchspannend ist eine biologische Einheit 12 in der Membran 11 ausgebildet, und zwar von der ersten Seite 10a zur zweiten Seite 10b reichend. Wie oben bereits beschrieben wurde, kann es sich bei der biologischen Einheit 12 um ein Membranprotein handeln. Dargestellt ist in der Fig. 3 eine Ausführungsform, bei welcher die biologische Einheit 12 eine Ionenpumpe definiert, durch welche durch Umsatz einer ersten Substratspezies S zu einer umgesetzten Substratspezies S' eine Ladung tragende Spezies Q von der ersten Seite 10a in Richtung des dargestellten Transportpfeils auf die zweite Seite 10b der Zellmembran oder Membran 11 transportiert wird, wobei gegebenenfalls optional noch der Einfluss eines Wirkstoffs W auf die Funktionalität der biologischen Einheit 12 eingesetzt werden kann, z.B. zu Zwecken der Untersuchung.

Wie oben bereits diskutiert wurde, kann es sich bei dem Primärträger 10 um ein Membranfragment oder um eine geschlossene Membrananordnung im Sinne einer Zelle, einer Organelle, eines Virus, eines Bakteriums, eines Vesikels, eines Liposoms oder einer micellären Struktur handeln. Auch sind Bruchstücke oder Verbände dieser Entitäten denkbar.

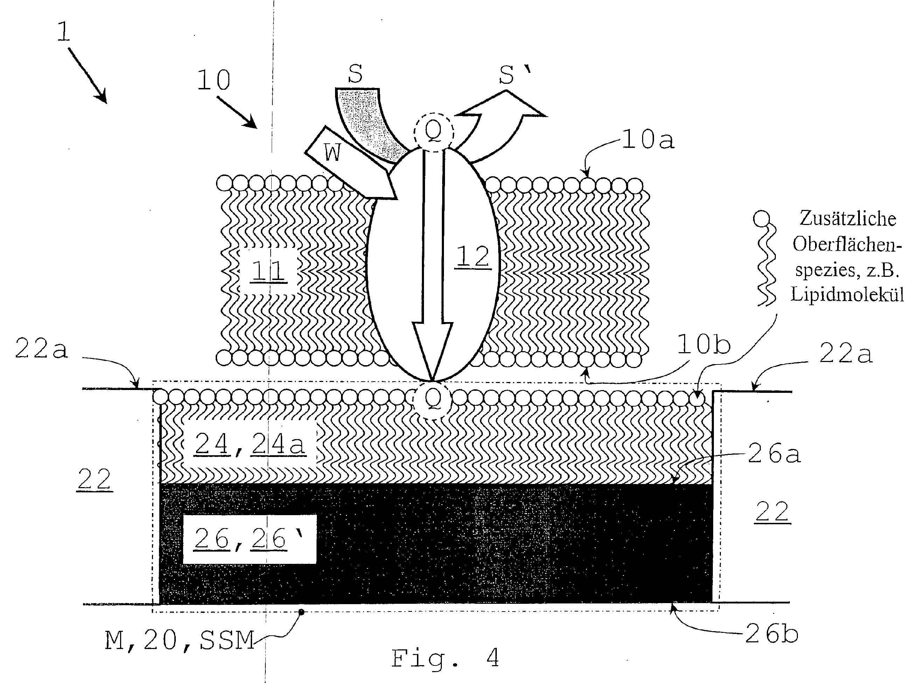

Die Fig. 4 zeigt die Struktur einer ersten Anwendung einer Ausführungsform der erfindungsgemäßen Biosensoranordnung 1 auf einem Primärträger 10, wie er in Fig. 3 dargestellt ist. Die Membranbiosensorelektrode M in Form einer festkörperunterstützten Membran SSM dient dabei als Sekundärträger 20 für den Primärträger 10.

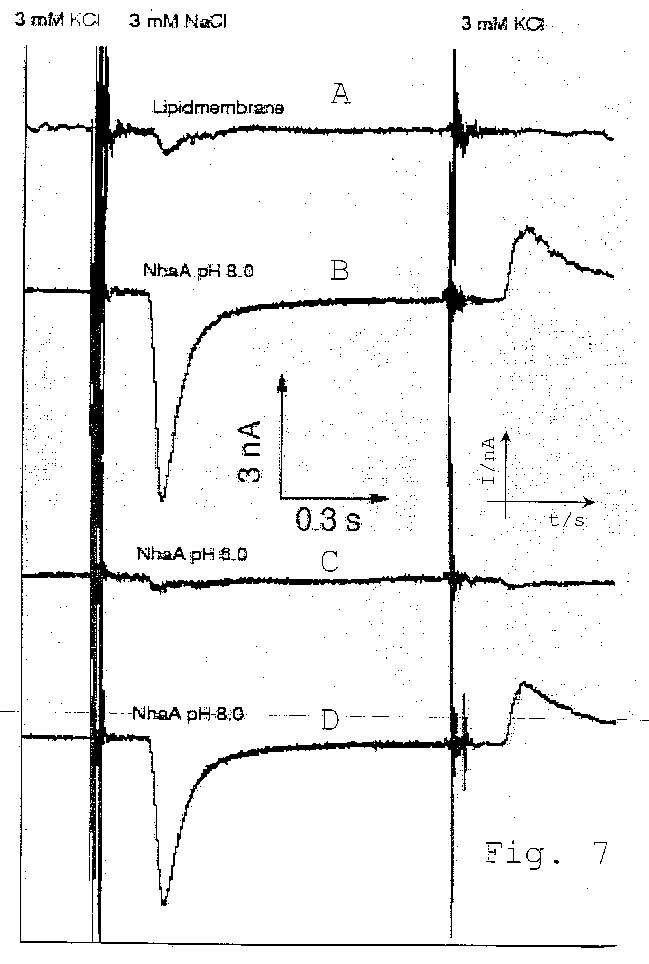

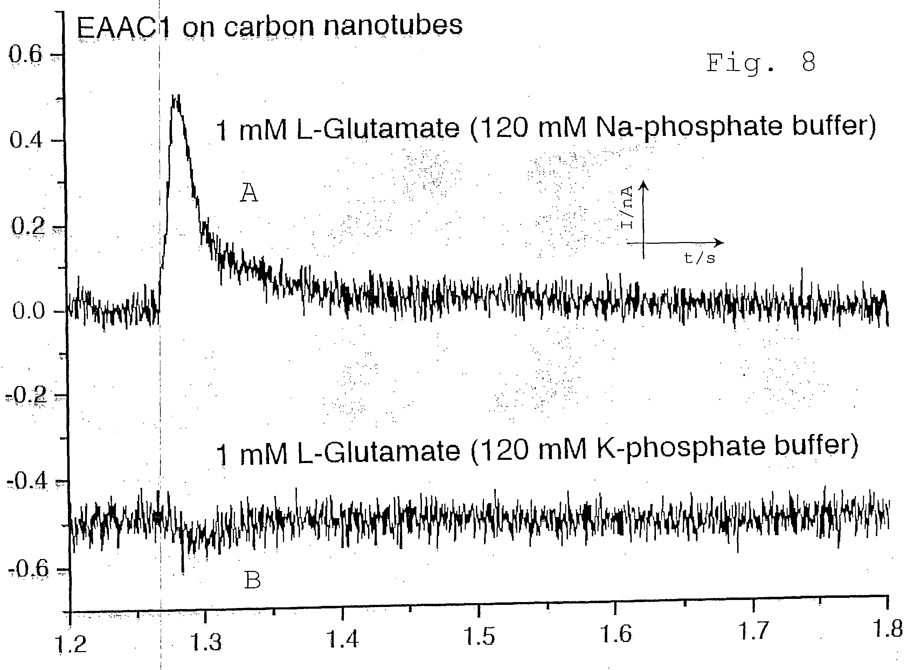

Der Primärträger 10 heißt deshalb Primärträger, weil er der eigentliche Träger der biologischen Einheit 12 ist, welche zur Untersuchung steht. Die festkörperunterstützte Membran SSM im Sinne einer Membranbiosensorelektrode M dient dabei nur in sekundärer Hinsicht als Träger, weshalb sie Sekundärträger 20 genannt wird. Durch eine räumliche Annäherung eines oder einer Mehr- oder Vielzahl Primärträger 10 mit mindestens einer oder einer Mehr- oder Vielzahl biologischer Einheiten 12, insbesondere in gleichartiger Art und Weise, kann bei entsprechender gleicher Ausrichtung der Primärträger 10 und der biologischen Einheiten 12 und bei simultaner Aktivierung ein makroskopischer Ladungstransport gemessen werden, und zwar in Form eines Verschiebungsstroms, wie unten im Zusammenhang mit den Fig. 7 und 8 noch erläutert wird.

Diese Situation trifft grundsätzlich für sämtliche Ausführungsformen der Fig. 4, 5 und 6 zu.

Bei der Ausführungsform der Fig. 4 ist das Elektrodensubstrat 26 im Trägersubstrat 22 einstückig integriert ausgebildet und bildet somit eine Elektrode 26'. Diese Elektrode 26' ist gegenüber dem Messmedium 30, in welchem sich der oder die Primärträger 10 mit den biologischen Einheiten 12 befinden, mittels des Biomaterialbereichs 24, hier in Form einer Lipidmonoschicht 24a elektrisch isoliert ausgebildet, so dass die sich ergebende Anordnung der festkörperunterstützten Membran SSM als Membranbiosensorelektrode M als kapazitiv gekoppelte Elektrode wirkt. Dies wird maßgeblich dadurch erreicht, dass die Lipidmonoschicht 24a als ihr einziger Bestandteil des Biomaterialbereichs 24 auf der hier hydrophoben Oberfläche 26a des Elektrodensubstrats 26 derart ausgebildet ist, dass eine elektrisch dichte und somit elektrisch isolierende Struktur zum Messmedium 30, zum Primärträger 10 und zur biologischen Einheit 12 hin vorliegt.

Der Biomaterialbereich 24 soll grundsätzlich eine mögliche Kompatibilität zwischen dem Elektrodensubstrat 26 und der entsprechenden Elektrode 26' und dem Primärträger sowie zu den biologischen Einheiten 12 herstellen, so dass im Hinblick auf die biologische Funktion der biologischen Einheit 12 möglichst native Verhältnisse erreicht werden.

In der Ausführungsform der Fig. 4 besteht der Biomaterialbereich 24 ausschließlich aus einer Lipidmonoschicht 24a, wobei die Lipidmoleküle sich dicht gepackt in einer zweidimensionalen Struktur auf der Oberfläche 26a des Elektrodensubstrats 26 dicht anordnen und wobei darüber hinaus die Lipidketten aufgrund ihrer hydrophoben Natur zur hydrophoben Oberfläche 26a des Elektrodensubstrats 26 hin ausgerichtet sind und die hydrophilen Lipidköpfe zum Messmedium 30, hier in Form eines wässrigen Messmediums 30 ausgerichtet sind.

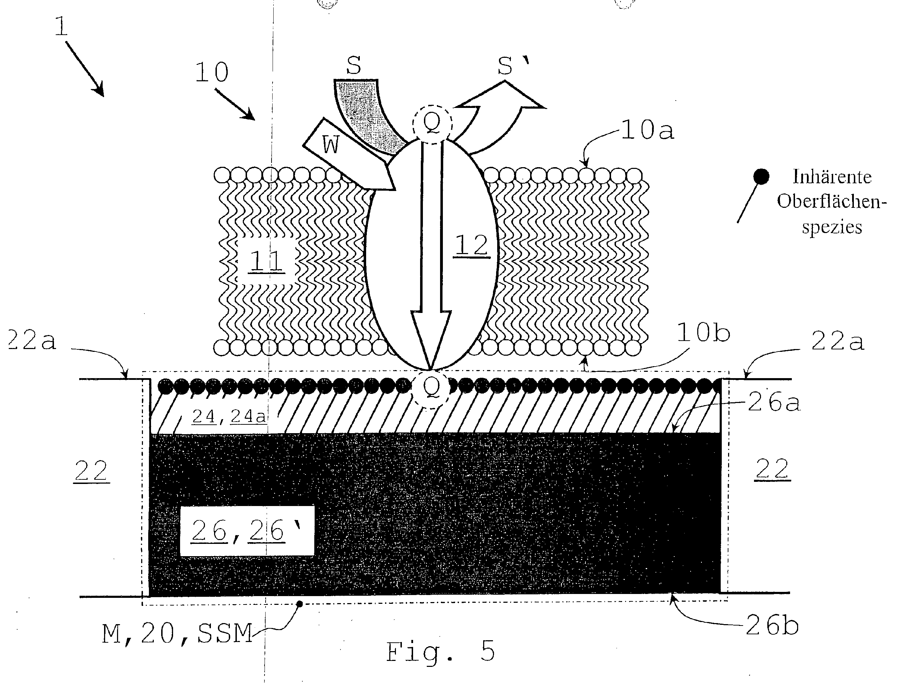

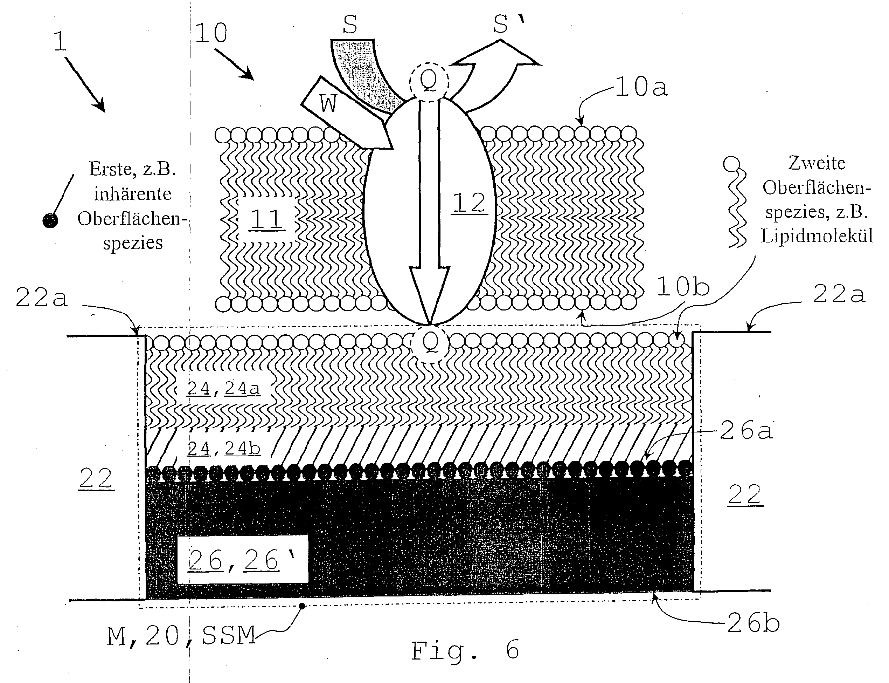

Die Anordnungen der Fig. 5 und 6 entsprechen im Wesentlichen der Anordnung, die in Fig. 4 dargestellt ist, wobei jedoch unterschiedliche Biomaterialbereiche 24 vorliegen.

Bei der Ausführungsform der Fig. 5 besteht der Biomaterialbereich 24 ebenfalls aus einer einzigen Monoschicht 24a, die jedoch aufgrund eines zweiten Zuschlagsstoffes inhärent aus dem Elektrodensubstrat 26 an dessen Oberfläche 26a heraus entsteht. Maßgeblich kann hier insbesondere der Unterschied zwischen Bulkmaterial und Oberflächenmaterial des Elektrodensubstrats 26 sein, wobei die Beimischungen im Elektrodensubstrat 26 in Form von Zuschlagsstoffen an der Oberfläche 26a ihre Wirkung entfalten und somit eine biologisch kompatible Struktur für die Primärträger 10 und die darin enthaltenen biologischen Einheiten 12 anbieten.

Bei der Ausführungsform der Fig. 6 wird ebenfalls zunächst inhärent eine erste Monoschicht 24b für den Biomaterialbereich 24 direkt an der Oberfläche 26a des Elektrodensubstrats 26 über vorgesehene Zuschlagsstoffe inhärent ausgebildet. Dabei organisieren sich an der Oberfläche 26a des Elektrodensubstrats 26 die Moleküle des Zuschlagsstoffs derart, dass eine hydrophobe Oberflächenstruktur entsteht, auf welcher sich eine zweite Oberflächenspezies in Form zusätzlich hinzugefügter Lipidmoleküle, ähnlich wie bei der Ausführungsform der Fig. 4, anordnen kann, so dass wiederum im Messmedium 30 die Lipidköpfe in Richtung auf das Messmedium 30 zu angeordnet sind und somit wiederum eine biologisch kompatible Oberfläche der Membranbiosensorelektrode M in Form einer festkörperunterstützten Membran SSM als Sekundärträger 20 definieren.

Die Fig. 7 und 8 zeigen elektrische Ströme, die aufgrund in biologischen Einheiten 12, welche in Primärträgern 10 angeordnet sind, erzeugt wurden, z.B. im Rahmen einer der Anordnung aus den Fig. 1 bis 6. Dabei ist auf den Abszissen jeweils die Zeit t in Sekunden s und auf den Ordinaten die gemessene elektrische Stromstärke I aufgetragen.

Bei den Messergebnissen, die in Fig. 7 dargestellt sind, handelt es sich um an eine erfindungsgemäße Biosensoranordnung 1 angeordnete Liposomen, welche als Primärträger 10 vorgesehen sind und als biologische Einheiten 12 einen darin exprimierten bakteriellen Natrium-Protonenaustauscher aufweisen. Dargestellt sind jeweils elektrische Transportströme, die durch den Natrium- und Protonentransport in entgegengesetzten Richtungen an der Grenzfläche der Membranbiosensorelektrode M als Sekundärträger 20 bei einem Lösungswechsel von 3 mmol/l Kaliumchlorid zu 3 mmol/l Natriumchlorid entstehen. Die Spuren A bis D aus der Fig. 7 entsprechen Experimenten, die an einer nackten Lipidmembran 24a, in Anwesenheit des Natrium-Protonenaustauschers bei einem pH-Wert von 8,0, bei Anwesenheit des Natrium-Protonenaustauschers bei einem pH-Wert von 6,0 bzw. abermals bei Anwesenheit des Natrium-Protonentauschers bei einem pH-Wert von 8,0 erzielt wurden.

Bei dem in Fig. 8 gezeigten Experiment handelt es sich um eine erfindungsgemäße Biosensoranordnung, bei welcher ein auf einem organischen Polymer basierende Elektrodenbereich eines Elektrodensubstrats 26 mittels Kohlenstoffnanotubes leitfähig gemacht wurde. Als Messspezies ist hier ein Ensemble von Membranfragmenten als Primärträger 10 vorgesehen, wobei in die Membranfragmente als Primärträger 10 der so genannte EAACl-Transporter aus CHO-Zellen vorgesehen ist. Die Experimente der Spuren A und B aus Fig. 8 zeigen Lösungswechsel zu einer Lösung ohne L-Glutamat zu 1 mmol/l Glutamat, und zwar bei einem Basispuffer von 120 mmol/l Natriumsulfat in Wasser bzw. 120 mmol/l Kaliumsulfat in Wasser, jeweils unter entsprechender Pufferung.

### Bezugszeichenliste

- 1: erfindungsgemäße Biosensoranordnung
- 10: Primärträger, Vesikel, Membranfragment
- 10a: Oberfläche, Außenseite, extravesikuläre Seite, extrazelluläre Seite
- 10b: Innenfläche, Innenseite, intravesikuläre Seite, intrazelluläre Seite
- 11: Membran des Primärträgers 10
- 12: biologische Einheit, Membranprotein
- 13: Innenmedium
- 20: Sekundärträger, Sensorelektrodeneinrichtung, Membranbiosensorelektrode
- 20a: erste oder obere Oberfläche
- 20c: zweite oder untere Oberfläche
- 21: Elektrodenbereich
- 22: Träger, Trägersubstrat
- 22a: Oberflächen, Oberflächenbereich, Oberseitenoberflächenbereich
- 24: Biomaterialbereich, Isolationsbereich
- 24a: oberste Schicht, Oberschicht, Oberflächenbereich, Lipidmonoschicht
- 24b: untere Schicht, Unterschicht
- 26: Elektrode
- 30: Messmedium
- 40: Datenerfassungs-/Steuereinrichtung
- 50: Messbereich, Gefäß, Küvette
- 50a: erste oder obere Oberfläche
- 50b: Boden, Bodenbereich
- 50c: zweite oder untere Oberfläche
- 50w: Wand, Wandbereich

- A: aktivierendes Messmedium
- A+W: aktivierendes Messmedium mit Wirkstoff W
- Cₘ: spezifische Kapazität
- E: Entsorgung
- Gₘ: spezifische Leitfähigkeit
- M: Membranbiosensorelektrode, Membranbiosensorelektrodenbereich
- Q: Ladungsträger
- S: Substrat
- S': umgesetztes Substrat
- SSM: Membranstruktur, festkörperunterstützte Membran, solid supported membrane
- U(t): Spannungssignal
- v: Fließgeschwindigkeit, Strömungsgeschwindigkeit
- W: Wirkstoff
- X: Wirkstoff

## Patentansprüche

1. Biosensoranordnung (1) zur amperometrischen und/oder potentiometrischen, pharmakologischen Wirkort- und/oder Wirkstofftestung,
- welche mit mindestens einem Elektrodensubstrat (26) mit einer Oberfläche (26a) ausgebildet ist, welches eine Elektrode (26') der Biosensoranordnung (1) oder einen Teil einer Elektrode (26') bildet, und
- welche mit mindestens einem Biomaterialbereich (24) ausgebildet ist, welcher in und/oder auf der Oberfläche (26a) des Elektrodensubstrats (26) vorgesehen ist,
- wobei das Elektrodensubstrat (26) mit oder aus einem Kunststoffmaterial oder einem Polymermaterial ausgebildet ist und
- wobei das Kunststoffmaterial oder das Polymermaterial elektrisch leitfähig ausgebildet sind.

2. Biosensoranordnung (1) nach Anspruch 1,
**dadurch gekennzeichnet ,**
**dass** das Kunststoffmaterial oder das Polymermaterial mit oder aus einem oder mehreren organischen Materialien ausgebildet sind.

3. Biosensoranordnung (1) nach einem der vorangehenden Ansprüche,
**dadurch gekennzeichnet ,**
**dass** die elektrische Leitfähigkeit des Kunststoffmaterials oder des Polymermaterials durch das Vorsehen mindestens eines ersten Zuschlagsstoffes im Kunststoffmaterial oder Polymermaterial ausgebildet ist.

4. Biosensoranordnung (1) nach Anspruch 3,
**dadurch gekennzeichnet ,**
**dass** als mindestens ein erster Zuschlagsstoff ein metallisches Material vorgesehen ist.

5. Biosensoranordnung (1) nach einem der vorangehenden Ansprüche 3 oder 4,
**dadurch gekennzeichnet ,**
**dass** als mindestens ein erster Zuschlagsstoff eine Form von Kohlenstoff vorgesehen ist.

6. Biosensoranordnung (1) nach einem der vorangehenden Ansprüche 3 bis 5,
**dadurch gekennzeichnet ,**
**dass** als mindestens ein erster Zuschlagsstoff ein Material aus oder mit Nanopartikeln und/oder mit Nanotubes vorgesehen ist.

7. Biosensoranordnung (1) nach einem der vorangehenden Ansprüche 3 bis 6,
**dadurch gekennzeichnet ,**
**dass** als mindestens ein erster Zuschlagsstoff ein Material oder eine Kombination von Materialien aus der Gruppe vorgesehen ist, die besteht aus:
- Kohlenstoff in Form von Ruß,
- Kohlenstoff in Form von Graphit,
- Kohlenstoff in Form von Nanopartikeln,
- Kohlenstoff in Form von Buckminsterfullerenen oder deren - insbesondere gecageten - Derivaten,
- Kohlenstoff in Form von Nanotubes und
- Derivaten dieser Materialien.

8. Biosensoranordnung (1) nach einem der vorangehenden Ansprüche,
**dadurch gekennzeichnet ,**
- **dass** der Biomaterialbereich (24) elektrisch isolierend ausgebildet ist und
- **dass** durch den Biomaterialbereich (24) das Elektrodensubstrat (26) elektrisch isoliert ausgebildet ist.

9. Biosensoranordnung (1) nach einem der vorangehenden Ansprüche,
**dadurch gekennzeichnet ,**
**dass** der Biomaterialbereich (24) schichtartig ausgebildet ist.

10. Biosensoranordnung (1) nach einem der vorangehenden Ansprüche,
**dadurch gekennzeichnet ,**
**dass** der Biomaterialbereich (24) mit einer oder aus einer Abfolge von Monoschichten (24a, 24b) gebildet ist.

11. Biosensoranordnung (1) nach Anspruch 10,
**dadurch gekennzeichnet ,**
**dass** die Monoschichten (24a, 24b) als spontan selbstorganisierende Schichten ausgebildet sind.

12. Biosensoranordnung (1) nach einem der vorangehenden Ansprüche,
**dadurch gekennzeichnet ,**
**dass** der Biomaterialbereich (24) oder eine oder mehrere Schichten (24b, 24a) des Biomaterialbereichs (24) als chemisch und/oder physikalisch modifizierter oder umgewandelter Bereich der Oberfläche (26a) des Elektrodensubstrats (26) ausgebildet sind.

13. Biosensoranordnung (1) nach einem der vorangehenden Ansprüche,
**dadurch gekennzeichnet ,**
**dass** der Biomaterialbereich (24) oder eine oder mehrere Schichten (24b, 24a) des Biomaterialbereichs (24) über einen zweiten Zuschlagsstoff im Material des Elektrodensubstrats (26) ausgebildet sind.

14. Biosensoranordnung (1) nach einem der vorangehenden Ansprüche,
**dadurch gekennzeichnet ,**
**dass** der Biomaterialbereich (24) oder eine oder mehrere Schichten (24b, 24a) des Biomaterialbereichs (24) über eine inhärente Oberflächenstruktur im Material des Elektrodensubstrats (26) ausgebildet sind.

15. Biosensoranordnung (1) nach einem der vorangehenden Ansprüche,
**dadurch gekennzeichnet ,**
**dass** der Biomaterialbereich (24) oder eine oder mehrere Schichten (24b, 24a) des Biomaterialbereichs (24) über ein zusätzlich auf die Oberfläche (26a) des Elektrodensubstrats (26) aufgebrachtes Oberflächenmaterial ausgebildet sind.

16. Biosensoranordnung (1) nach einem der vorangehenden Ansprüche,
**dadurch gekennzeichnet ,**
**dass** der Biomaterialbereich (24) als Schicht oder mit einer obersten und vom Elektrodensubstrat (26) abgewandten Schicht (24, 24b) mit oder aus einer amphiphilen organischen Verbindung oder einem Lipid ausgebildet ist.

17. Biosensoranordnung (1) nach einem der vorangehenden Ansprüche,
- bei welcher das Elektrodensubstrat (26) und der Biomaterialbereich (24) als Membranbiosensorelektrode (M) und als Sekundärträger (20) der Biosensoranordnung (1) fungierend ausgebildet sind,
- bei welcher eine Mehrzahl Primärträger (10) in unmittelbarer räumlicher Nachbarschaft des Sekundärträgers (20) vorgesehen ist und
- bei welcher die Primärträger (10) zu einer elektrischen Aktion aktivierbare biologische Einheiten (12) aufweisen.

18. Biosensoranordnung (1) nach Anspruch 17,
bei welcher als Primärträger (10) ein Primärträger aus der Gruppe vorgesehen ist, die gebildet wird von: eukariontischen Zellen, prokariontischen Zellen, Bakterien, Viren, Bestandteilen davon, Membranfragmenten davon, Verbänden davon, jeweils in nativer Form, in abgewandelter Form, in gereinigter, mikrobiologisch geänderter Form und/oder in molekularbiologisch geänderter Form.

19. Biosensoranordnung (1) nach Anspruch 17,
bei welcher als Primärträger (10) ein Primärträger aus der Gruppe vorgesehen ist, die gebildet wird von: Vesikeln, Liposomen und mizellären Strukturen.

20. Biosensoranordnung (1) nach einem der vorangehenden Ansprüche,
**dadurch gekennzeichnet ,**
**dass** durch den Biomaterialbereich (24) die jeweilige Elektrode (26') im Betrieb von einem vorgesehenen Messmedium (30), von den Primärträgern (10) und von den biologischen Einheiten (12) elektrisch isoliert ist.

21. Biosensoranordnung (1) nach einem der vorangehenden Ansprüche,
**dadurch gekennzeichnet ,**
**dass** der das Elektrodensubstrat (26) isolierende und abdeckende Bereich des Biomaterialbereichs (24) mit einer Membranstruktur (SSM) mit einer Fläche von etwa A ≈ 0,1 - 50 mm² und mit einer spezifischen elektrischen Leitfähigkeit von etwa Gₘ ≈ 1 - 100 nS/cm² und/oder mit einer spezifischen Kapazität von etwa Cₘ ≈ 10 - 1000 nF/cm² ausgebildet ist.

22. Biosensoranordnung (1) nach einem der vorangehenden Ansprüche,
**dadurch gekennzeichnet ,**
**dass** eine biologische Einheit (12) vorgesehen ist, welche zu einer elektrogenen Ladungsträgerbewegung aktivierbar ausgebildet ist, insbesondere zu einem elektrogenen Ladungsträgertransport.

23. Biosensoranordnung (1) nach einem der vorangehenden Ansprüche,
**dadurch gekennzeichnet ,**
**dass** als biologische Einheit (12) jeweils eine Einheit aus der Gruppe vorgesehen ist, die gebildet wird von: Membranproteinen, Ionenpumpen, Ionenkanälen, Transportern, Rezeptoren, Bestandteilen davon und Verbänden davon.

24. Biosensoranordnung (1) nach einem der vorangehenden Ansprüche,
**dadurch gekennzeichnet ,**
**dass** als biologische Einheit (12) eine Einheit in nativer Form, in abgewandelter Form, in gereinigter Form, in mikrobiologisch geänderter Form oder molekularbiologisch geänderter Form vorgesehen ist.

25. Biosensoranordnung (1) nach einem der vorangehenden Ansprüche,
**dadurch gekennzeichnet ,**
- **dass** ein Trägersubstrat (22) mit einer Oberfläche (22a) ausgebildet ist, insbesondere auf einer vorgesehenen Oberseite, und
- **dass** das Elektrodensubstrat (26) zumindest teilweise auf und/oder in dem Trägersubstrat (22) und/oder als Teil der Oberfläche (22a) des Trägersubstrats (22) ausgebildet ist.

26. Biosensoranordnung (1) nach Anspruch 25,
**dadurch gekennzeichnet ,**
**dass** das Trägersubstrat (22) mit dem Elektrodensubstrat (26) zusammen als ein Gefäß (50) - insbesondere in höchsten bis auf Zu- und Abfluss geschlossener Form einer Durchflussküvette - oder als Teil eines Gefäßes (50) ausgebildet ist.

27. Biosensoranordnung (1) nach einem der vorangehenden Ansprüche 25 oder 26,
**dadurch gekennzeichnet ,**
**dass** das Trägersubstrat (22) und das Elektrodensubstrat (26) miteinander einstückig ausgebildet sind.

28. Biosensoranordnung (1) nach Anspruch 27,
**dadurch gekennzeichnet ,**
**dass** das Trägersubstrat (22) und das Elektrodensubstrat (26) in Mehrkomponentenspritzgusstechnik gefertigt ausgebildet sind.

29. Biosensoranordnung (1) nach einem der vorangehenden Ansprüche 25 bis 28,
**dadurch gekennzeichnet ,**
**dass** das Trägersubstrat (22) aus einem oder mit einem chemisch und biologisch inerten Material ausgebildet ist.

30. Biosensoranordnung (1) nach einem der vorangehenden Ansprüche 25 bis 29,
**dadurch gekennzeichnet ,**
**dass** das Trägersubstrat (22) aus einem oder mit einem elektrisch isolierenden Material ausgebildet ist.

31. Biosensoranordnung (1) nach einem der vorangehenden Ansprüche 25 bis 30,
**dadurch gekennzeichnet ,**
**dass** das Trägersubstrat (22) aus einem oder mit einem mechanisch flexiblen Material ausgebildet ist, nach Art einer Folie.

32. Biosensoranordnung (1) nach einem der vorangehenden Ansprüche 25 bis 31,
**dadurch gekennzeichnet ,**
**dass** das Trägersubstrat (22) aus einem oder mit einem gegenüber Proteinen, biologischen und/oder chemischen Wirkstoffen höchstens gering adsorptiven Material ausgebildet ist.

33. Biosensoranordnung (1) nach einem der vorangehenden Ansprüche 25 bis 32,
**dadurch gekennzeichnet ,**
**dass** das Trägersubstrat (22) aus einem oder mit einem Material oder einer Kombination von Materialien aus der Gruppe ausgebildet ist, die besteht aus PMMA, PTFE, POM, FR4, Polyimid, PI, Kapton, PEN, PET, im UV-Bereich transparenten Materialien und im sichtbaren Spektralbereich transparenten Materialien.

34. Biosensoranordnung (1) nach einem der vorangehenden Ansprüche 25 bis 33,
**dadurch gekennzeichnet ,**
**dass** eine Mehrzahl Elektrodensubstrate (26) und Biomaterialbereiche (24) in zusammenhängender oder in getrennter Form, elektrisch voneinander isoliert und lateral voneinander beabstandet und **dadurch** eine Mehrzahl elektrisch unabhängiger Elektroden (26') ausgebildet ist.

35. Biosensoranordnung (1) nach Anspruch 34,
**dadurch gekennzeichnet ,**
**dass** die Mehrzahl Elektroden (26') in einer Reihe oder in Matrixform angeordnet sind.

36. Verfahren zur Herstellung einer Biosensoranordnung (1) zur amperometrischen und/oder potentiometrischen, pharmakologischen Wirkort- und/oder Wirkstofftestung,
- bei welchem mindestens ein Elektrodensubstrat (26) mit einer Oberfläche (26a) ausgebildet wird, welches eine Elektrode (26') der Biosensoranordnung (1) oder einen Teil einer Elektrode (26') bildet, und
- bei welchem mindestens ein Biomaterialbereich (24) ausgebildet wird, welcher in und/oder auf der Oberfläche (26a) des Elektrodensubstrats (26) vorgesehen wird,
- wobei das Elektrodensubstrat (26) mit oder aus einem Kunststoffmaterial oder einem Polymermaterial ausgebildet wird und
- wobei das Kunststoffmaterial oder das Polymermaterial elektrisch leitfähig ausgebildet werden.

37. Verfahren nach Anspruch 36,
**dadurch gekennzeichnet ,**
**dass** das Kunststoffmaterial oder das Polymermaterial mit oder aus einem oder mehreren organischen Materialien ausgebildet werden.

38. Verfahren nach einem der vorangehenden Ansprüche 36 oder 37,
**dadurch gekennzeichnet ,**
**dass** die elektrische Leitfähigkeit des Kunststoffmaterials oder des Polymermaterials durch das Vorsehen mindestens eines ersten Zuschlagsstoffes im Kunststoffmaterial oder Polymermaterial ausgebildet wird.

39. Verfahren nach Anspruch 38,
**dadurch gekennzeichnet ,**
**dass** als mindestens ein erster Zuschlagsstoff ein metallisches Material vorgesehen wird.

40. Verfahren nach einem der vorangehenden Ansprüche 38 oder 39,
**dadurch gekennzeichnet ,**
**dass** als mindestens ein erster Zuschlagsstoff eine Form von Kohlenstoff vorgesehen ist.

41. Verfahren nach einem der vorangehenden Ansprüche 38 bis 40,
**dadurch gekennzeichnet ,**
**dass** als mindestens ein erster Zuschlagsstoff ein Material aus oder mit Nanopartikeln und/oder mit Nanotubes vorgesehen ist.

42. Verfahren nach einem der vorangehenden Ansprüche 38 bis 41,
**dadurch gekennzeichnet ,**
**dass** als mindestens ein erster Zuschlagsstoff ein Material oder eine Kombination von Materialien aus der Gruppe vorgesehen ist, die besteht aus:
- Kohlenstoff in Form von Ruß,
- Kohlenstoff in Form von Graphit,
- Kohlenstoff in Form von Nanopartikeln,
- Kohlenstoff in Form von Buckminsterfullerenen oder deren ― insbesondere gecageten ― Derivaten,
- Kohlenstoff in Form von Nanotubes und
- Derivaten dieser Materialien.

43. Verfahren nach einem der vorangehenden Ansprüche,
**dadurch gekennzeichnet ,**
- **dass** der Biomaterialbereich (24) elektrisch isolierend ausgebildet wird und
- **dass** durch den Biomaterialbereich (24) das Elektrodensubstrat (26) elektrisch isoliert ausgebildet wird.

44. Verfahren nach einem der vorangehenden Ansprüche 36 bis 43,
**dadurch gekennzeichnet ,**
**dass** der Biomaterialbereich (24) schichtartig ausgebildet wird.

45. Verfahren nach einem der vorangehenden Ansprüche 36 bis 44,
**dadurch gekennzeichnet ,**
**dass** der Biomaterialbereich (24) mit einer oder aus einer Abfolge von Monoschichten (24a, 24b) gebildet wird.

46. Verfahren nach Anspruch 45,
**dadurch gekennzeichnet ,**
**dass** die Monoschichten (24a, 24b) als spontan selbstorganisierende Schichten ausgebildet werden.

47. Verfahren nach einem der vorangehenden Ansprüche 36 bis 46,
**dadurch gekennzeichnet ,**
**dass** der Biomaterialbereich (24) oder eine oder mehrere Schichten (24b, 24a) des Biomaterialbereichs (24) als chemisch und/oder physikalisch modifizierter oder umgewandelter Bereich der Oberfläche (26a) des Elektrodensubstrats (26) ausgebildet werden.

48. Verfahren nach einem der vorangehenden Ansprüche 36 bis 47,
**dadurch gekennzeichnet ,**
**dass** der Biomaterialbereich (24) oder eine oder mehrere Schichten (24b, 24a) des Biomaterialbereichs (24) über einen zweiten Zuschlagsstoff im Material des Elektrodensubstrats (26) ausgebildet werden.

49. Verfahren nach einem der vorangehenden Ansprüche 36 bis 48,
**dadurch gekennzeichnet ,**
**dass** der Biomaterialbereich (24) oder eine oder mehrere Schichten (24b, 24a) des Biomaterialbereichs (24) über eine inhärente Oberflächenstruktur im Material des Elektrodensubstrats (26) ausgebildet werden.

50. Verfahren nach einem der vorangehenden Ansprüche 36 bis 49,
**dadurch gekennzeichnet ,**
**dass** der Biomaterialbereich (24) oder eine oder mehrere Schichten (24b, 24a) des Biomaterialbereichs (24) über ein zusätzlich auf die Oberfläche (26a) des Elektrodensubstrats (26) aufgebrachtes Oberflächenmaterial ausgebildet werden.

51. Verfahren nach einem der vorangehenden Ansprüche 36 bis 50,
**dadurch gekennzeichnet ,**
**dass** der Biomaterialbereich (24) als Schicht oder mit einer obersten und vom Elektrodensubstrat (26) abgewandten Schicht (24, 24b) mit oder aus einer amphiphilen organischen Verbindung oder einem Lipid ausgebildet wird.

52. Verfahren nach einem der vorangehenden Ansprüche 36 bis 51,
- bei welcher das Elektrodensubstrat (26) und der Biomaterialbereich (24) als Membranbiosensorelektrode (M) und als Sekundärträger (20) der Biosensoranordnung (1) fungierend ausgebildet werden,
- bei welcher eine Mehrzahl Primärträger (10) in unmittelbarer räumlicher Nachbarschaft des Sekundärträgers (20) vorgesehen ist und
- bei welcher die Primärträger (10) zu einer elektrischen Aktion aktivierbare biologische Einheiten (12) aufweisen.

53. Verfahren nach Anspruch 52,
bei welcher als Primärträger (10) ein Primärträger aus der Gruppe vorgesehen ist, die gebildet wird von: eukariontischen Zellen, prokariontischen Zellen, Bakterien, Viren, Bestandteilen davon, Membranfragmenten davon, Verbänden davon, je weils in nativer Form, in abgewandelter Form, in gereinigter, mikrobiologisch geänderter Form und/oder in molekularbiologisch geänderter Form.

54. Verfahren nach Anspruch 52,
bei welcher als Primärträger (10) ein Primärträger aus der Gruppe vorgesehen ist, die gebildet wird von: Vesikeln, Liposomen und mizellären Strukturen.

55. Verfahren nach einem der vorangehenden Ansprüche 36 bis 54,
**dadurch gekennzeichnet ,**
**dass** durch den Biomaterialbereich (24) die jeweilige Elektrode (26') im Betrieb von einem vorgesehenen Messmedium (30), von den Primärträgern (10) und von den biologischen Einheiten (12) elektrisch isoliert ist.

56. Verfahren nach einem der vorangehenden Ansprüche 36 bis 55,
**dadurch gekennzeichnet ,**
**dass** der das Elektrodensubstrat (26) isolierende und abdeckende Bereich des Biomaterialbereichs (24) mit einer Membranstruktur (SSM) mit einer Fläche von etwa A ≈ 0,1 - 50 mm² und mit einer spezifischen elektrischen Leitfähigkeit von etwa Gₘ ≈ 1 - 100 nS/cm² und/oder mit einer spezifischen Kapazität von etwa Cₘ ≈ 10 - 1000 nF/cm² ausgebildet wird.

57. Verfahren nach einem der vorangehenden Ansprüche 36 bis 56,
**dadurch gekennzeichnet ,**
**dass** eine biologische Einheit (12) vorgesehen ist, welche zu einer elektrogenen Ladungsträgerbewegung aktivierbar ausgebildet wird, insbesondere zu einem elektrogenen Ladungsträgertransport.

58. Verfahren nach einem der vorangehenden Ansprüche 36 bis 57,
**dadurch gekennzeichnet ,**
**dass** als biologische Einheit (12) jeweils eine Einheit aus der Gruppe vorgesehen ist, die gebildet wird von: Membranproteinen, Ionenpumpen, Ionenkanälen, Transportern, Rezeptoren, Bestandteilen davon und Verbänden davon.

59. Verfahren nach einem der vorangehenden Ansprüche 36 bis 58,
**dadurch gekennzeichnet ,**
**dass** als biologische Einheit (12) eine Einheit in nativer Form, in abgewandelter Form, in gereinigter Form, in mikrobiologisch geänderter Form oder molekularbiologisch geänderter Form vorgesehen ist.

60. Verfahren nach einem der vorangehenden Ansprüche 36 bis 59,
**dadurch gekennzeichnet ,**
- **dass** ein Trägersubstrat (22) mit einer Oberfläche (22a) ausgebildet wird, insbesondere auf einer vorgesehenen Oberseite, und
- **dass** das Elektrodensubstrat (26) zumindest teilweise auf und/oder in dem Trägersubstrat (22) und/oder als Teil der Oberfläche (22a) des Trägersubstrats (22) ausgebildet wird.

61. Verfahren nach Anspruch 60,
**dadurch gekennzeichnet ,**
**dass** das Trägersubstrat (22) mit dem Elektrodensubstrat (26) zusammen als ein Gefäß (50) - insbesondere in höchsten bis auf Zu- und Abfluss geschlossener Form einer Durchflussküvette - oder als Teil eines Gefäßes (50) ausgebildet wird.

62. Verfahren nach einem der vorangehenden Ansprüche 60 oder 61,
**dadurch gekennzeichnet ,**
**dass** das Trägersubstrat (22) und das Elektrodensubstrat (26) miteinander einstückig ausgebildet werden.

63. Verfahren nach Anspruch 62,
**dadurch gekennzeichnet ,**
**dass** das Trägersubstrat (22) und das Elektrodensubstrat (26) in Mehrkomponentenspritzgusstechnik gefertigt ausgebildet werden.

64. Verfahren nach einem der vorangehenden Ansprüche 60 bis 63,
**dadurch gekennzeichnet ,**
**dass** das Trägersubstrat (22) aus einem oder mit einem chemisch und biologisch inerten Material ausgebildet wird.

65. Verfahren nach einem der vorangehenden Ansprüche 60 bis 64,
**dadurch gekennzeichnet ,**
**dass** das Trägersubstrat (22) aus einem oder mit einem elektrisch isolierenden Material ausgebildet wird.

66. Verfahren nach einem der vorangehenden Ansprüche 60 bis 65,
**dadurch gekennzeichnet ,**
**dass** das Trägersubstrat (22) aus einem oder mit einem mechanisch flexiblen Material ausgebildet wird, nach Art einer Folie.

67. Verfahren nach einem der vorangehenden Ansprüche 60 bis 66,
**dadurch gekennzeichnet ,**
**dass** das Trägersubstrat (22) aus einem oder mit einem gegenüber Proteinen, biologischen und/oder chemischen Wirkstoffen höchstens gering adsorptiven Material ausgebildet wird.

68. Verfahren nach einem der vorangehenden Ansprüche 60 bis 67,
**dadurch gekennzeichnet ,**
**dass** das Trägersubstrat (22) aus einem oder mit einem Material oder einer Kombination von Materialien aus der Gruppe ausgebildet wird, die besteht aus PMMA, PTFE, POM, FR4, Polyimid, PI, Kapton, PEN, PET, im UV-Bereich transparenten Materialien und im sichtbaren Spektralbereich transparenten Materialien.

69. Verfahren nach einem der vorangehenden Ansprüche 60 bis 68,
**dadurch gekennzeichnet ,**
**dass** eine Mehrzahl Elektrodensubstrate (26) und Biomaterialbereiche (24) in zusammenhängender oder in getrennter Form, elektrisch voneinander isoliert und lateral voneinander beabstandet und **dadurch** eine Mehrzahl elektrisch unabhängiger Elektroden (26') ausgebildet wird.

70. Verfahren nach Anspruch 69,
**dadurch gekennzeichnet ,**
**dass** die Mehrzahl Elektroden (26') in einer Reihe oder in Matrixform angeordnet werden.
